# EUROPÄISCHE PATENTSCHRIFT

(11) **EP 1 088 129 B1**
(45) Veröffentlichungstag und Bekanntmachung des Hinweises auf die Patenterteilung: **23.01.2008**
(21) Anmeldenummer: 00922623.4
(22) Anmeldetag: 10.04.2000
(51) Int. Cl.: D06N 1/00, B29C 43/30

(54) **NEUARTIGE LINOLEUMSTRUKTUR UND VERFAHREN ZU DEREN HERSTELLUNG**
NOVEL LINOLEUM STRUCTURE AND METHOD FOR PRODUCING SAME
NOUVELLE STRUCTURE DE LINOLEUM ET SON PROCEDE DE FABRICATION

(30) Priorität: 08.04.1999 DE 19915868
(43) Veröffentlichungstag der Anmeldung: 04.04.2001
(73) Patentinhaber: DLW Aktiengesellschaft, D-74321 Bietigheim-Bissingen (DE)
(72) Erfinder: MARKMANN, Ole, D-27753 Delmenhorst (DE); SCHULTE, Bernd, D-27753 Delmenhorst (DE)
(74) Vertreter: Müller-Boré & Partner Patentanwälte
(86) Internationale Anmeldenummer: PCT/EP2000/003180
(87) Internationale Veröffentlichungsnummer: WO 2000/061855

(56) Entgegenhaltungen:
- EP-A- 0 755 764
- DE-A- 4 407 989
- DE-A- 19 730 954
- DE-C- 4 405 589
- US-A- 2 894 560

## Beschreibung

Die vorliegende Erfindung betrifft ein Verfahren zur Herstellung eines neuartigen gemusterten Linoleumflächengebildes.

Linoleum wird seit vielen Jahrzehnten in unifarbenen, jaspierten und überwiegend auch in marmorierten Musterungen hergestellt. Die Herstellung von Linoleumflächengebilden geschieht in der Weise, daß zunächst alle Komponenten, wie Bindemittel (sog. Bedford-Zement oder B-Zement aus einem teiloxidierten Leinöl und mindestens einem Harz als Klebrigmacher), mindestens ein Füllstoff und mindestens ein Färbemittel in einem geeigneten Mischapparat, z.B. einem Kneter, Walzwerk oder Extruder, zu einer möglichst homogenen Grundmasse (Mischmasse) vermischt werden. Als Füllstoff werden üblicherweise Weichholzmehl und/oder Korkmehl (bei gleichzeitiger Anwesenheit von Holzmehl und Korkmehl typischerweise im Gewichtsverhältnis 90:10) und/oder Kreide, Kaolin (China-Clay) und Schwerspat verwendet. Die Mischmasse enthält üblicherweise mindestens ein Färbemittel, wie ein Pigment (z.B. Titandioxid) und/oder andere übliche Färbemittel auf Basis von anorganischen und organischen Farbstoffen. Eine typische Linoleumzusammensetzung enthält, bezogen auf das Gewicht der Nutzschicht, ca. 40 Gew.-% Bindemittel, ca. 30 Gew.-% organische Füllstoffe, ca. 20 Gew.-% anorganische (mineralische) Füllstoffe und ca. 10 Gew.-% Färbemittel. Ferner können in der Mischmasse übliche Additive, wie Verarbeitungshilfsmittel, Antioxidantien, UV-Stabilisatoren, Gleitmittel und dergleichen enthalten sein, die in Abhängigkeit des Bindemittels ausgewählt werden.

Zur Herstellung eines einfarbigen Linoleumflächengebildes wird die so erhaltene Mischmasse einem Walzwerk (z.B. einem Kalander) zugeführt und unter Druck und einer Temperatur von üblicherweise 10 bis 150°C (abhängig von der Rezeptur und der Verfahrenstechnik) auf ein Trägermaterial gepreßt. Als Trägermaterial kann ein Material auf Basis natürlicher und/oder synthetischer Gewebe oder Gewirke sowie textiler Werkstoffe eingesetzt werden. Als Beispiele seien Jutegewebe, Mischgewebe aus natürlichen Fasern, wie Baumwolle und Zellwolle, Glasfasergewebe, mit Haftvermittler beschichtetes Glasfasergewebe, Mischgewebe aus Synthesefasern, Gewebe aus Kern/Mantelfasern mit z.B. einem Kern aus Polyester und einer Ummantelung aus Polyamid, genannt. Als Haftvermittler für Glasfasergewebe kann beispielsweise eine Beschichtung der Glasfasern aus einem Styrol-Butadien-Latex verwendet werden.

Beim Pressen der Mischmasse auf das Trägermaterial wird das Walzwerk (z.B. der Walzenabstand eines Kalanders) so eingestellt, daß die resultierende Bodenbelagsbahn die gewünschte Schichtdicke erhält. Bei Linoleum-Bodenbelägen beträgt die Gesamtdicke üblicherweise etwa 2 mm bis etwa 6 mm, insbesondere etwa 2 mm bis etwa 4 mm.

Wenn ein farbig gemusteter Bodenbelag hergestellt werden soll, werden zunächst Mischmassen bzw. Grundmassen verschiedener Farbe separat hergestellt, zu Fellen gewalzt und granuliert. Danach werden verschiedenfarbige Granulate miteinander vermischt und dann dem Walzwerk (z.B. einem Kalander) zugeführt, wodurch ein jaspiertes Linoleumfell entsteht. Dieses kann entweder direkt auf das Trägergewebe oder auf das mit unifarbener Mischmasse und/oder einer Korkmentschicht vorbeschichtete Trägergewebe gepreßt werden.

Auch das Verfahren zur Herstellung von marmorierten Strukturen (bekannt unter den Handelsnamen Marmorette® bzw. Marmoleum®) ist an sich bekannt und stellt sich wie folgt dar:

Die aus den üblichen Rohstoffen für Linoleum, z. B. Linoleumzement, Holzmehl, Korkmehl, Kreide, Weißpigment und Buntpigmenten, gefertigten Mischmassen werden je nach gewünschter Dessinierung in definierten Mengenanteilen gemischt und als gekratzte Mischmasse einem Walzwerk zugeführt. Das im Walzwerk erzeugte mehrfarbige, jaspierte Linoleumfell (ca. 1,6 m breit) wird in ca. 2 m lange Stücke geteilt und schuppenförmig zu einem mehrlagigen Fellpaket gelegt. Die stark längsorientierte Jaspierung der Einzelfelle verläuft im weiteren Fertigungsprozeß quer zur Kalanderfertigungsrichtung. Das Fellpaket wird jetzt dem Kalanderspalt zugeführt und mit Friktion auf die gewünschte Stärke der Deckschicht ausgewalzt. Zeitgleich mit der Deckschicht wird der Untergrund gefertigt, der aus Jutegewebe und aus kalandrierter, im Regelfall einfarbiger, Linoleummischmasse besteht. Untergrund und Deckschicht werden aufeinandergelegt und im Bandkalander kraftschlüssig miteinander verbunden.

Im Gegensatz zu Flächengebilden, bei denen Kunststoff als Bindemittel in der Nutzschicht verwendet wird, ist ein Flächengebilde auf Basis von Linoleum nach dem Kalandrieren der Mischmasse bzw. Grundmasse nicht gebrauchsfähig, da Linoleum in diesem Stadium keine für den weiteren Fertigungsprozeß und den Gebrauch ausreichende Zug- und Druckfestigkeit aufweist. Diese wird erst in einem nachfolgenden Reifeprozeß durch weiteres Vernetzen des Bindemittels erreicht. Dazu wird die Bahn vom Kalander in das sogenannte Reifehaus bzw. die Reifekammer transportiert und über Stangen hängend gelagert. Die Reifung der Linoleum-Bahn, d.h. die weitere Vernetzung bis zum gewünschten Vernetzungsgrad, erfolgt durch erwärmte Luft mit einer Temperatur von etwa 40 bis 100°C während eines Zeitraumes, der von der Rezeptur, der Dicke der Nutzschicht, der Temperatur und der gewünschten Vernetzungsdichte abhängt und üblicherweise zwischen etwa 5 und etwa 50 Tagen liegt. Somit dient das Trägermaterial bei der Herstellung des Linoleumflächengebildes dazu, die Nutzschicht bis nach der Reife zu tragen und zu fixieren und danach als beispielsweise Armierung des Bodenbelags.

Da die im Flächengebilde enthaltenen organischen Füllstoffe, wie Holzmehl und/oder Korkmehl bei der Reifung des Flächengebildes Feuchtigkeit abgeben, wird das Flächengebilde nach der Reifung üblicherweise konditioniert, d.h. das Flächengebilde wird wieder auf eine übliche Hausfeuchtigkeit eingestellt.

Der Nachteil des Verfahren zur Herstellung der herkömmlichen gemusterten Linoleumflächengebilde, bei denen unterschiedlich gefärbte, gekratzte Mischmassen direkt in einen Kalanderspalt geschüttet und zu einem jaspierten Linoleumwalzfell ausgewalzt werden, ist jedoch, daß zwangsweise mehr oder weniger stark längsgerichtete Strukturen resultieren, wodurch die Gestaltungsmöglichkeiten für ein gemustertes Linoleumflächengebilde stark eingeschränkt sind.

DE 197 30 954 A1 beschreibt einen Bodenbelag auf Linoleumbasis, welcher elektrisch leitfähig ist und bei welchem die Linoleumnutzschicht eine unregelmäßige Musterung, z.B. eine Marmorierung, aus unterschiedlich gefärbten Bereichen aufweist. Die unterschiedlich gefärbten Bereiche sind konturenscharf voneinander abgegrenzt und weisen eine unterschiedliche elektrische Leitfähigkeit auf.

Somit liegt der vorliegenden Erfindung die Aufgabe zugrunde, ein Verfahren zur Herstellung eines neuartigen Linoleumflächengebildes bereitzustellen, welches eine größere Variationsbreite der Musterung des herzustellenden Linoleumflächengebildes erlaubt. Ferner sollen vorzugsweise bereits vorhandene Herstellungsanlagen zur Herstellung verwendet werden können.

Die Aufgabe wird durch die in den Ansprüchen gekennzeichneten Ausführungsformen der vorliegenden Erfindung gelöst.

Insbesondere wird die Aufgabe durch Bereitstellung eines Verfahrens zur Herstellung eines gemusterten Linoleumflächengebildes gelöst, welches die Schritte
- Aufstreuen mindestens einer Sorte von ein- oder mehrfarbigen Mischmassepartikeln auf mindestens eine Seite eines ein- oder mehrfarbigen Linoleumwalzfells, wobei eine Zusammensetzung der Mischmassepartikel verwendet wird, welche einen geringeren Anteil Linoleumzement aufweist als das Linoleumwalzfell,
- im wesentlichen verzugsfreies Einpressen der Mischmassepartikel in das Linoleumwalzfell und
- Schneiden des durch Aufstreuen und Einpressen von Mischmassepartikeln ausgerüsteten Linoleumwalzfells, Legen des geschnittenen Linoleumwalzfells zu einem schuppenförmigen Fellpaket und anschließend Auswalzen des schuppenförmigen Fellpakets zu einem mustergebenden Fell
umfaßt.

Das Verfahren zur Herstellung der neuartigen Struktur basiert im wesentlichen auf dem Verfahren zur Herstellung eines marmorierten oder jaspierten Linoleumflächengebildes, ist jedoch durch den Einbau zusätzlicher Verfahrensschritte im Produktionsprozeß ergänzt worden.

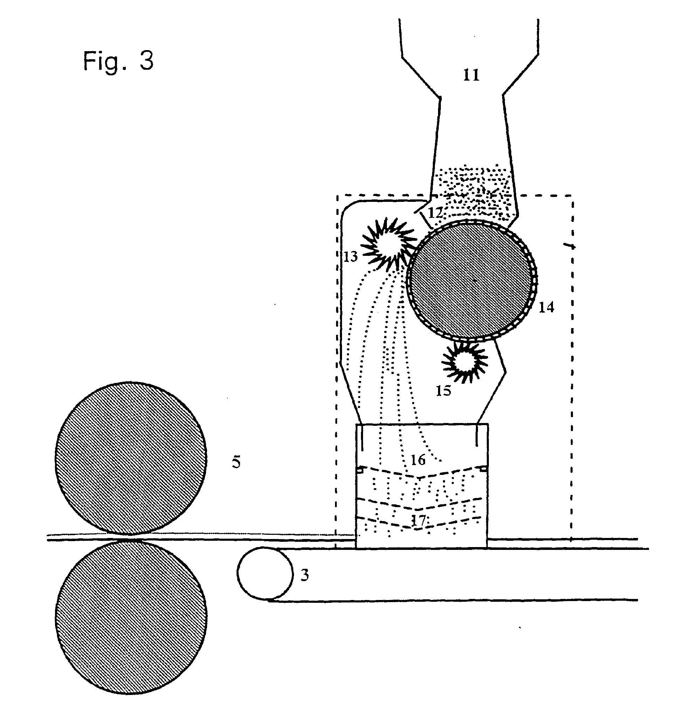

Das Einstreuen andersfarbiger Partikel auf ein Linoleumwalzfell ist bei der Herstellung von Linoleumflächengebilden bisher nicht angewandt worden, da bisher keine geeigneten Streutechniken für die Linoleummischmasse zur Verfügung standen. Ein beispielsweise gemäß der vorliegenden Erfindung verwendbares Streuverfahren wird nachstehend, insbesondere in Verbindung mit Fig. 3, beschrieben.

Die einzustreuenden Mischmassepartikel liegen in Form einer körnigen Streumasse vor. Sie können sowohl ein- als auch mehrfarbig sein und es wird erfindungsgemäß mindestens eine Sorte derartiger Mischmassepartikel auf das Linoleumfell eingestreut. Die Zusammensetzung der Partikel kann gleich oder verschieden von der Zusammensetzung des Linoleumwalzfells sein. Vorzugsweise weisen die Partikel eine bis auf die Pigmentierung ähnliche Zusammensetzung wie das Linoleumwalzfell auf. Erfindungsgemäß sind die Partikel trockener als das Linoleumfell, d.h. linoleumzementärmer, wodurch ihre Streufähigkeit verbessert wird. Vorzugsweise sind die Mischmassepartikel in mindestens einer zur Farbe des Linoleumwalzfells kontrastierenden Farbe gefärbt. Die Partikel können alle im wesentlichen die gleiche Größe aufweisen, es können aber auch Partikel unterschiedlicher Größe auf das Linoleumfell gestreut werden. Ferner können die Partikel in unterschiedlichen Formen vorliegen, wie beispielsweise als unregelmäßige Körnchen, Kügelchen oder eiförmig. Vorzugsweise weisen die Partikel einen Durchmesser von 0,5 bis 20 mm, mehr bevorzugt von 0,5 bis 10 mm, auf. Gemäß einer Ausführungsform weisen die Partikel einen jeweils größeren Durchmesser als das Linoleumfell auf, auf welches sie aufgestreut werden. Es kann eine Sorte derartiger Mischmassepartikel oder auch zwei oder mehrere Sorten eingestreut werden. Die Herstellung der Partikel kann auf dem gleichen Weg wie bei der normalen Mischmasse erfolgen. Gegebenenfalls kann eine separate Aussiebung erforderlich sein.

Erfindungsgemäß können die Partikel auf ein unifarbiges oder ein mehrfarbiges, wie ein marmoriertes oder ein jaspiertes Linoleumfell gestreut werden. Das Linoleumwalzfell weist vorzugsweise eine Dicke von 0,5 bis 2,5 mm, noch bevorzugter von 1 bis 2 mm und besonders bevorzugt 1 bis 1,5 mm, auf.

Es ist ausreichend, die Partikel nur auf entweder die Rückseite oder die Vorderseite des Linoleumfells aufzustreuen. Aus Gründen einer noch gleichmäßigeren, durchgehenden Musterung kann es bevorzugt sein, beide Seiten des Linoleumfells mit den Partikeln zu bestreuen. Ferner ist es bevorzugt, die Partikel durch das Anordnen von siebähnlichen Vorrichtungen während des Streuvorgangs zu vereinzeln, um eine möglichst gleichmäßige und homogene Verteilung der Partikel auf dem Linoleumfell zu bewirken. Im allgemeinen werden die Partikel in einem unwillkürlichen Muster, wie es durch einen Streuvorgang entsteht, auf dem Linoleumfell zu liegen kommen und eingepreßt werden. Die Partikel können aber auch in einem willkürlich vorgegebenen Muster verteilt sein, beispielsweise in

Form von geometrischen und ungeometrischen Figuren. Die Mischmassepartikel werden vorzugsweise in einer Menge, bezogen auf das Gewicht des Linoleumfells von 10 bis 500 g/m² eingestreut. Vorzugsweise liegen die eingepreßten Partikel dicht an dicht im Linoleumwalzfell.

Die Partikel werden nach dem Aufstreuen auf das Linoleumfell beispielsweise mittels einer Mangel oder eines anderen Preßwerkzeugs im wesentlichen verzugsfrei in das Linoleumfell eingedrückt. Vorzugsweise werden die Mischmassepartikel der Streumasse so tief in das weiche Linoleumfell eingepreßt, daß möglichst ein ebener Abschluß mit dem Linoleumfell resultiert. Die Partikel können aber auch nur teilweise in das Linoleumfell gedrückt werden, so daß ein Linoleumfell mit einer nichtebenen Oberflächenstruktur erhalten wird.

Gemäß einer Ausführungsform des erfindungsgemäßen Verfahrens kann das durch Aufstreuen und Einpressen von Linoleumpartikeln ausgerüstete Linoleumwalzfell auch direkt als mustergebendes Fell (Deckschicht) mit dem Untergrund verbunden werden.

Gemäß einer besonders bevorzugten Ausführungsform des erfindungsgemäßen Verfahrens wird das Linoleumwalzfell jedoch nach dem Aufstreuen und Einpressen der Partikel in beispielsweise etwa 2 m lange Stücke geschnitten und dann mittels eines Felllegers zu einem schuppenförmigen Fellpaket gelegt, wobei an jeder Stelle des Fellpakets vorzugsweise mindestens 10, mehr bevorzugt 10 bis 20 Felle übereinander liegen und die Schuppenabstände vorzugsweise 100 bis 200 mm betragen. Je nach Dicke der einzelnen Felle weist das Fellpaket somit vorzugsweise eine Dicke von 12 bis 35 mm auf. Dabei werden die Stücke vorzugsweise so gelegt, daß die ursprüngliche Längsrichtung des Linoleumwalzfells quer (90°) zur Transportrichtung des schuppenförmigen Fellpakets zu liegen kommt. Anschließend kann das Fellpaket beispielsweise mittels eines Fellkalanders auf die gewünschte Stärke zu einem mustergebenden Fell (Deckschicht) unter Friktion ausgewalzt werden, wobei es auf die 10- bis 20-fache Länge gedehnt wird. Der verwendete Fellkalander weist eine obere kalte Walze mit einer rauhen Oberfläche und eine untere erwärmte Walze mit einer glatten Oberfläche auf. Durch die rauhe Oberfläche der oberen kalten Walze des Fellkalanders werden zungenförmige Stücke aus der Oberfläche des Fellpakets herausgerissen, wobei das Fellpaket insbesondere an den Grenzflächen zwischen der Matrix und den eingestreuten und eingepreßten andersfarbigen Partikeln reißt. Da das Fellpaket von der Unterseite her durch die erwärmte untere Walze des Fellkalanders erwärmt wird und somit in der unteren Hälfte eine etwas weichere Konsistenz als die mit der kalten Walze in Kontakt stehende obere Seite des Fellpakets aufweist, werden die durch das Zerreißen entstehenden Lücken bzw. Zwischenräume durch unter den eingestreuten Partikeln liegendes Material in der Matrixfarbe aufgefüllt. Dadurch vergrößert sich der Abstand zwischen den vormals vorzugsweise dicht an dicht liegenden eingestreuten Partikeln. Man sollte annehmen, daß die die eingestreuten Partikel durch das Kalandern und Auswalzen des Fellpakets in Längsrichtung verstreckt werden und so ein längsgerichtetes Streifenmuster entsteht. Überraschenderweise bleibt jedoch auch gemäß dieser Ausführungsform die Form der eingestreuten Partikel im wesentlichen erhalten, und die Linoleumpunkte sind im fertigen Deckfell ungerichtet bzw. nur schwach orientiert. Es wird angenommen, daß durch das Reißen des Linoleumfells an den Grenzflächen zwischen der Matrix und den eingestreuten Partikeln die Scherkräfte weniger stark auf die Partikel einwirken, so daß diese nicht verformt werden und die ungerichtete Form der eingestreuten Partikel erhalten bleibt. Diese "Sollbruchstellen" zwischen Matrix und Partikeln können dadurch erklärt werden, daß die Haftung der eingepreßten Partikel zur Martix vor dem abschließenden Kalandervorgang etwas geringer als der Zusammenhalt der Matrix selbst ist. Dieses kann insbesondere dann der Fall sein, wenn die eingestreuten Partikel, wie vorstehend beschrieben, vorzugsweise etwas trockener sind.

Das Fellpaket weist nach dem Kalandern vorzugsweise nur noch eine Dicke von 1 bis 2 mm auf und enthält die eingestreuten Partikel in der gesamten Dicke des Flächengebildes, so daß selbst dann, wenn an einigen Stellen die in der obersten Schicht eingelagerten Partikel durch Abnutzung abgetragen wurden, bereits Partikel aus etwas tiefer liegenden Schichten an der Oberfläche sichtbar geworden sind. Somit weist das durch das erfindungsgemäße Verfahren hergestellte Flächengebilde auch bei stärkerer Abnutzung immer eine punktförmige Musterung auf.

Das wie vorstehend beschrieben kalanderte Fellpaket kann als Deckschicht beispielsweise einer mit Doubliermangel mit dem Untergrund verbunden werden.

Der Untergrund besteht in der Regel aus einem Trägergewebe, wie beispielsweise Jute, Glasfaser- oder Kunststoffgewebe, auf das eine dünne Schicht einer beispielsweise einfarbigen Linoleummischmasse kalandriert wird.

Die kraftschlüssige Verbindung von Untergrund und Deckschicht erfolgt beispielsweise mittels eines Bandkalanders oder ähnlichen Vorrichtungen. Die anschließende Reifung und weitere Verarbeitung des durch das erfindungsgemäße Verfahren hergestellten Flächengebildes wie bei herkömmlichen Linoleumflächengebilden erfolgt.

Überraschenderweise kann mit dem erfindungsgemäßen Verfahren ein Linoleumflächengebilde mit einer Struktur erhalten werden, die einerseits durch die Struktur des Linoleumfells und andererseits durch die eingestreuten, die Deckschicht durchdringenden ein- oder mehrfarbigen Partikel mindestens einer Sorte, die ein nahezu richtungsfreies Oberflächenbild ergeben, variiert werden.

Durch das erfindungsgemäße Verfahren kann eine unbestimmte Zahl verschiedener, neuartiger Linoleumstrukturen hergestellt werden. Allen Strukturen gemeinsam ist die Einstreuung von ein- oder mehrfarbigen Mischmassepartikeln beispielsweise in unregelmäßiger Anordnung, wobei ungerichtete bzw. nur schwach orientierte Linoleumpunkte entstehen. Variationen sind durch die Auswahl der Form und Größe, der Menge und Farbigkeit der eingestreuten Partikel und durch die Variation der Struktur des Linoleumwalzfells (marmoriert, uni, jaspiert etc.) möglich.

Ein nach dem erfindungsgemäßen Verfahren hergestelltes Flächengebilde ist ein Linoleumflächengebilde, welches eine Deckschicht als Matrix, die mindestens eine erste Farbe aufweist, und mindestens eine Sorte kontrastfarbener Partikel, die in die Matrix eingebettet sind, umfaßt. Die Deckschicht kann einfarbig, marmoriert oder jaspiert sein und eine oder mehrere Sorten ein- und/oder mehrfarbiger, in Größe und/oder Farbe verschiedener und/oder gleicher Partikel enthalten.

Die Partikel können nur in die Oberseite der Deckschicht eingebettet sein, als einzelne Partikel die gesamte Deckschicht durchdringen oder, wie vorstehend beschrieben, über die gesamte Dicke der Deckschicht verteilt sein. Vorzugsweise liegen die Partikel in unregelmäßiger Anordnung vor, sie können aber auch in einem willkürlich vorgegebenen Muster, beispielsweise in Form von geometrischen und nicht geometrischen Figuren, verteilt sein.

Bezogen auf das Gesamtgewicht der Deckschicht liegen die Partikel vorzugsweise in einer Menge von 10 bis 500 g/m² vor.

Die Figuren zeigen:

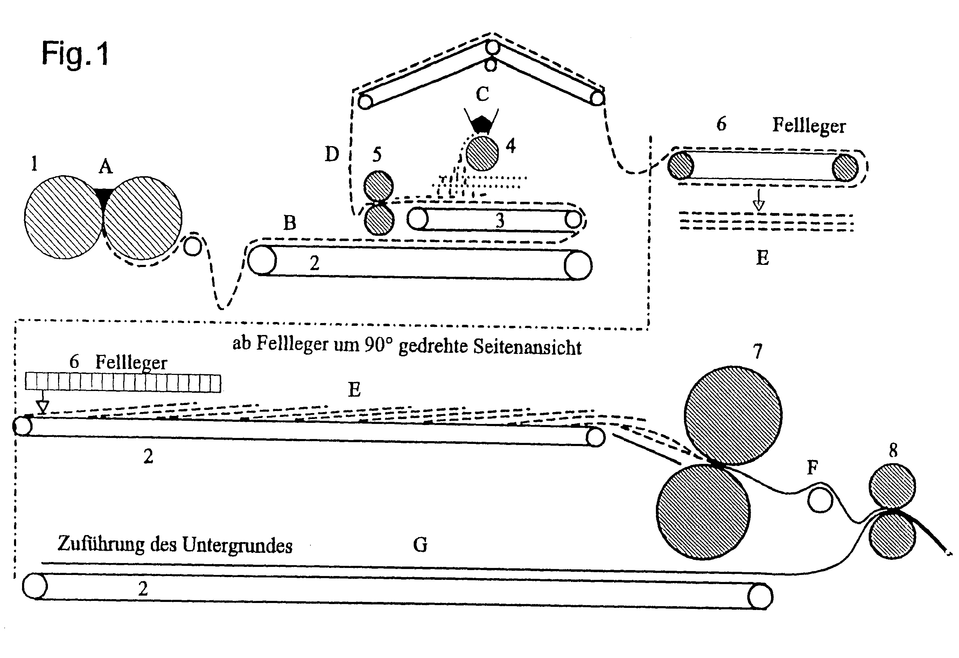

Fig. 1 ist eine schematische Ansicht einer Vorrichtung zur Durchführung einer bevorzugten Ausführungsform des erfindungsgemäßen Verfahrens. Aus der vorgefertigten ein- oder mehrfarbigen Linoleummischmasse A wird im Fellwalzwerk (1) ein Fell ausgewalzt. Je nach Mischmasse A resultiert ein unifarbenes bzw. jaspiertes Linoleumfell B. Über ein erstes Förderband (2) wird das Linoleumfell B auf ein zweites Förderband (3) transportiert, wo mittels einer Streuanlage (4), welche die Mischmassepartikel vereinzelt, mindestens eine Sorte einer ein- oder mehrfarbigen Streumasse C auf das Linoleumfell B gestreut wird. Nach dem Bestreuen des Linoleumfells B werden die Mischmassepartikel der Streumasse C mittels einer Mangel (5) tief in das weiche Linoleumfell B eingepreßt, so daß möglichst ein ebener Abschluß mit dem Linoleumfell B resultiert. Das so präparierte Linoleumfell D wird nun zum Fellleger (6) geführt, in ca. 2 m lange Stücke geteilt und zu einem schuppenförmigen Fellpaket E gelegt. Das Fellpaket E wird dabei derart auf ein weiteres Förderband legt, daß die bestreute Seite im Fellpaket E nach oben zeigt. Dieses Förderband führt das Fellpaket E dem Fellkalander (7) zu, wobei die bestreute Linoleumfellseite der kalten Musterungswalze zugewandt ist. Im Fellkalander (7) wird das Fellpaket E auf die gewünschte Stärke zum Strukturfell F (Deckschicht) ausgewalzt und in einem Doublierwalzwerk (8) mit dem Untergrund G verbunden.

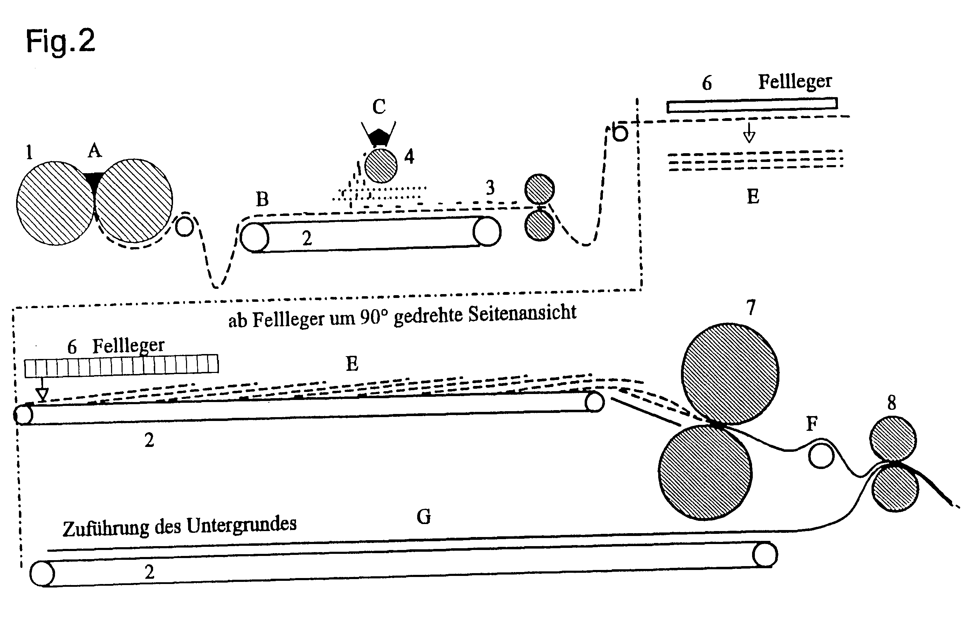

Fig. 2 ist eine schematische Ansicht einer Vorrichtung zur Durchführung einer weiteren bevorzugten Ausführungsform des erfindungsgemäßen Verfahrens. Während gemäß der in Fig. 1 gezeigten Ausführungsform die Rückseite des Linoleumfells B mit den Partikeln C bestreut wird, wird in der Anlage (2) die Streumasse C direkt auf die Vorderseite das Linoleumfelles B gestreut.
Fig. 3 ist eine schematische Ansicht einer Streuanlage (4) für eine Linoleummasse, welche bei dem erfindungsgemäßen Verfahren verwendet werden kann. Dabei wird die Linoleummischmasse in einen Trichter (11) geschüttet, welcher sich vorzugsweise nach unten leicht konisch öffnet, um eine Brückenbildung der Mischmasse zu verhindern. Eine profilierte Walze (14) nimmt in ihren Vertiefungen die Mischmasse auf, welche bei Rotation der Walze durch eine Rakel (12) in Höhe der erhabenen Walzenprofilierung abgestreift wird, so daß je nach Rotationsgeschwindigkeit eine genau bestimmte Mischmassenmenge in den Vertiefungen der profilierten Walze (14) zur danach folgenden Auswurfbürstenwalze (13) transportiert wird. Die gegenläufig rotierende Auswurfbürstenwalze (13) dreht sich mit deutlich höherer Geschwindigkeit als die profilierte Walze (14) und wirft mit der tief in die Vertiefungen der profilierten Walze (14) greifenden Bürste (13) die Mischmasse nach unten aus. Mit einer zusätzlichen Reinigungsbürste (15) können gegebenenfalls in den Vertiefungen der profilierten Walze (14) verbliebene Mischmasserückstände ausgeworfen werden. Die nach unten ausgeworfene Mischmasse fällt auf ein changierendes Sieb (16), welches zur Egalisierung und einer gleichmäßigen Streuung beiträgt. Unterhalb des changierenden Siebs (16) können noch ein oder mehrere feststehende Siebe (17) angeordnet sein, welche die in eine schräge Fallbewegung gebrachten Mischmassepartikel bremsen und mit möglichst wenig Energie auf das dicht darunter vorbeiziehende Linoleumfell auftreffen lassen. Ein Förderband (3) transportiert das bestreute Linoleumfell zu einer Mangel (5), mittels der die relativ stabilen Linoleumpartikel in das weiche Linoleumfell eingepreßt werden.

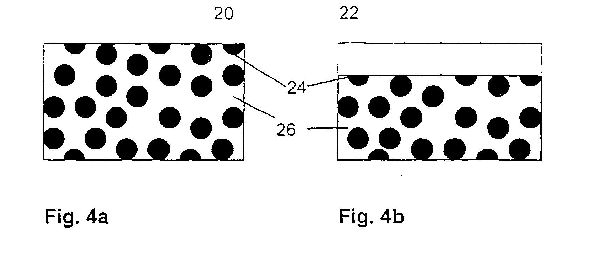

Fig. 4a und 4b zeigen schematisch Querschnitte durch die Deckschicht 20 und 22 in unterschiedlichen Abnutzungsstadien gemäß einer besonders bevorzugten Ausführungsform des erfindungsgemäßen Flächengebildes. Die farbigen, punktförmigen Partikel 24 sind über die gesamte Dicke der Deckschicht in der Matrix 26 verteilt. Fig. 4b zeigt die Deckschicht aus Fig. 4a in einem Zustand, wie sie sich nach längerem Gebrauch darstellt. Eine oberste Schicht des Flächengebildes wurde durch Abnutzung abgetragen, wobei sowohl die Matrix 26 als auch die Partikel 24 in dieser Schicht abgetragen wurden. Gleichzeitig sind aber nun Partikel aus tieferen Schichten sichtbar geworden, so daß das Muster des Bodenbelags sich für den Benutzer als gleichgeblieben darstellt.

## Patentansprüche

1. Verfahren zur Herstellung eines gemusterten Linoleumflächengebildes, welches die Schritte
- Aufstreuen mindestens einer Sorte von ein- oder mehrfarbigen Mischmassepartikeln auf mindestens eine Seite eines ein- oder mehrfarbigen Linoleumwalzfells, wobei eine Zusammensetzung der Mischmassepartikel verwendet wird, welche einen geringeren Anteil Linoleumzement aufweist als das Linoleumwalzfell,
- im wesentlichen verzugsfreies Einpressen der Mischmassepartikel in das Linoleumwalzfell und
- Schneiden des durch Aufstreuen und Einpressen von Mischmassepartikeln ausgerüsteten Linoleumwalzfells, Legen des geschnittenen Linoleumwalzfells zu einem schuppenförmigen Fellpaket und anschließend Auswalzen des schuppenförmigen Fellpakets zu einem mustergebenden Fell
umfaßt.

2. Verfahren nach Anspruch 1, wobei die Partikel mittels einer Mangel oder eines anderen Preßwerkzeugs in das Linoleumfell eingedrückt werden.

3. Verfahren nach einem der vorhergehenden Ansprüche, wobei ein unifarbenes, marmoriertes oder jaspiertes Linoleumwalzfell verwendet wird.

4. Verfahren nach einem der vorhergehenden Ansprüche, wobei das Linoleumwalzfell beidseitig mit Mischmassepartikeln bestreut wird.

## Claims

1. Process for producing a patterned linoleum sheet material, comprising the steps of
- dispersing at least one type of unicoloured or multicoloured mixed mass particles onto at least one side of a unicoloured or multicoloured rolled linoleum sheet, wherein a composition of mixed mass particles is used having a lower content of linoleum cement compared to the rolled linoleum sheet,
- substantially warp-free pressing the mixed mass particles into the rolled linoleum sheet and
- cutting the rolled linoleum sheet equipped with dispersed and pressed-in mixed mass particles, stacking the cut rolled linoleum sheet into a scale-like sheet stack and subsequently rolling the scale-like sheet stack into a pattern-providing sheet.

2. Process according to claim 1, wherein the particles are pressed into the linoleum sheet by means of a mangle or another pressing tool.

3. Process according to any one of the preceding claims, wherein a unicoloured, marbled or speckled rolled linoleum sheet is used.

4. Process according to any one of the preceding claims, wherein the mixed mass particles are dispersed onto both sides of the rolled linoleum sheet.

## Revendications

1. Procédé de fabrication d'un produit plat en linoléum à motifs, lequel comporte les étapes consistant à
- répandre au moins une sorte de particules de masse de mélange unicolores ou multicolores sur au moins une face d'une feuille roulée de linoléum unicolore ou multicolore, une composition des particules de masse de mélange étant utilisée, laquelle comprend une part de ciment de linoléum inférieure à celle de la feuille roulée de linoléum,
- enfoncer sensiblement sans déformation les particules de masse de mélange dans la feuille roulée de linoléum et
- découper la feuille roulée de linoléum finie par l'action de répandre et d'enfoncer les particules de masse de mélange, poser la feuille roulée de linoléum découpée pour obtenir un paquet de feuille roulée imbriquée puis laminer le paquet de feuille imbriquée pour obtenir une feuille produisant un motif.

2. Procédé selon la revendication 1, les particules étant enfoncées dans la feuille de linoléum au moyen d'une essoreuse à rouleaux ou d'un autre moule à compression.

3. Procédé selon l'une quelconque des revendications précédentes, une feuille roulée de linoléum unicolore, marbrée ou jaspée étant utilisée.

4. Procédé selon l'une quelconque des revendications précédentes, la feuille roulée de linoléum étant revêtue de part et d'autre des particules de masse de mélange.
